# EUROPÄISCHE PATENTANMELDUNG

(11) **EP 4 199 414 A1**
(43) Veröffentlichungstag der Anmeldung: **21.06.2023**
(21) Anmeldenummer: 21215851.3
(22) Anmeldetag: 20.12.2021
(51) Int. Cl.: H04L 9/32

(54) **LEITSYSTEM FÜR EINE TECHNISCHE ANLAGE UND COMPUTERIMPLEMENTIERTER ÜBERWACHUNGSDIENST**

(71) Anmelder: Siemens Aktiengesellschaft, 80333 München (DE)
(72) Erfinder: Palmin, Anna, 76187 Karlsruhe (DE)
(74) Vertreter: Siemens Patent Attorneys

(57) **Zusammenfassung**

Vorgeschlagen wird ein Verfahren, umfassend:
a) Überwachen einer Komponente (1), welche Teil einer technischen Anlage ist und beim Betrieb der technischen Anlage verwendet wird, wobei der Komponente (1) eine Konfiguration für die Verwendung in der technischen Anlage zugeordnet ist,
b) Beim Auftreten einer Änderung der Konfiguration der Komponente (1), insbesondere einer zuvor definierten Änderung, automatisches Initiieren und Durchführen einer Revokation von Zertifikaten, die der Komponente (1) für deren Verwendung beim Betrieb der technischen Anlage ausgestellt worden sind.

## Beschreibung

Die Erfindung betrifft ein Verfahren. Außerdem betrifft die Erfindung eine Komponente einer technischen Anlage, ein Leitsystem für die technische Anlage und einen computerimplementierten Überwachungsdienst.

Sichere Kommunikationsprotokolle wie z.B. HTTPS oder OPC UA finden zunehmend Einzug in technischen Anlagen (genauer gesagt sowohl in den diskreten als auch in den verfahrenstechnischen Anlagen). Die Verwendung dieser Protokolle setzt die Benutzung von sog. digitalen Zertifikaten nach dem Standard X.509 voraus.

Neben der sicheren Kommunikation ist für den optimalen Schutz einer (industriellen) technischen Anlage die Einhaltung einer sicheren Gerätekonfiguration im Einklang mit verschiedenen Security-Anforderungen wie z.B. "Security by Default" und "Least Functionality" erforderlich. Gemäß den aktuellen Security-Konzepten werden die Anlagenkomponenten vor der Inbetriebnahme im Einklang mit dem Security-Konzept der Anlage unter Verwendung der sog. Herstellergerätezertifikate (IDevID Cert. nach IEEE802.1AR) auf die Originalität geprüft, provisioniert und anschließend sicher (d.h. gemäß dem o.g. Security-Konzept und darauf basierenden Security-Policies) konfiguriert. Erst dann dürfen die Anlagenkomponenten die erforderlichen kundenspezifischen Zertifikate (LDevID Cert nach IEEE802.1AR) beantragen und anschließend mit ihren Kommunikationspartnern unter Verwendung dieser Zertifikate sicher kommunizieren.

Die Komponenten einer technischen Anlage kommunizieren in der Regel mit mehr als einem Kommunikationspartner und nutzen dabei mehr als ein sicheres Kommunikationsprotokoll. Beispielsweise kann ein industrielles Automatisierungssystem (AS) in der Regel sein webbasiertes User Interface per HTTPS für den Benutzerzugriff bereitstellen (wobei ein zugehöriges TLS Server Zertifikat zum Einsatz kommt) und gleichzeitig (in Rolle des OPC UA Server) per OPC UA mit den zugehörigen OPC UA-Clients kommunizieren. Deswegen sollten die Anlagenkomponenten in der Regel mehrere Zertifikate (LDevID Cert.) beantragen, wobei es aus Security-Sicht empfehlenswert ist, ein dedizierts Zertifikat pro Verwendungszweck zu beantragen bzw. zu nutzen.

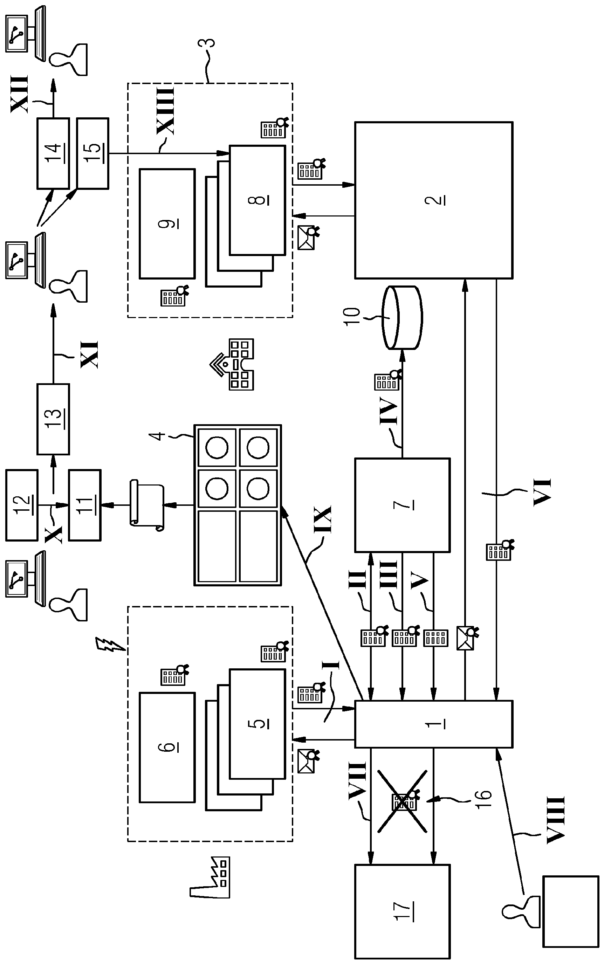

Falls die ursprünglich sichere Konfiguration einer Anlagenkomponente im laufenden Betrieb - beispielsweise bewusst (zwecks der Fehlersuche im Falle eines plötzlich aufgetretenen Kommunikationsproblems), versehentlich oder vorsätzlich - geändert wird (wobei bestimmte Security-Einstellungen wie z.B. Passwortschutz ggf. ganz ausgehebelt werden), hat dies in der Regel keine Auswirkung auf die bestehende zertifikatsbasierte Kommunikation einer Anlagenkomponente mit ihren Kommunikationspartnern. Um sich dabei weiterhin (wie in Abbildung 1, Schritt 6 gezeigt) gegenüber einem Kommunikationspartner erfolgreich authentifizieren zu können, benötigt die Anlagenkomponente lediglich das entsprechende "LDevID Cert", welches sie bei ihrer Inbetriebnahme erhalten hat und weiterhin "bedingungslos" nutzen darf.

Dabei kann jedoch durch diverse Konfigurationsänderungen wie beispielsweise eine (ggf. vorübergehende) Deaktivierung des Passwortes, eine Änderung des Anwenderprogramms oder eine Änderung der CPU-Schutzstufe eine böswillige Manipulation der Komponente ermöglicht werden. Beispielsweise kann ein durch das Aushebeln der ursprünglich vorgenommenen sicheren Konfiguration manipuliertes Automatisierungssystem (AS) die untergeordneten Anlagenkomponenten falsch ansteuern und/oder manipulierte Werte an einen Server und/oder ein Industrial Edge-Gerät (und somit in die zugehörige Cloud) übermitteln. Dies kann dazu führen, dass vollautomatisiert oder unter Mitwirkung eines Benutzers falsche Aktionen ausgelöst werden, was insbesondere in verfahrenstechnischen Anlagen beispielsweise zur Manipulation der produzierten Erzeugnisse (wie z.B. Impfstoffe) und somit zu erheblichen Schäden (u.a. zur erheblichen Gefährdung des Normalbetriebs und der Verfügbarkeit der Anlage) führen kann.

Anlagenkomponenten können aktuell Konfigurationsänderungen (beispielsweise in Form von sog. Security-Events) an eine entsprechende Sicherheitsstelle (beispielsweise an ein Security Information Event Management System, kurz: SIEM-System, oder einen Syslog-Server) melden. Die Reaktion darauf erfolgt jedoch nach dem aktuellen Stand der Technik in der Regel nicht automatisiert, sondern es wird (höchstens) dem Benutzer überlassen, eine (aus seiner Sicht bzw. gemäß der von ihm getroffenen Entscheidung) adäquate Aktion anzustoßen. Da die Verfügbarkeit im industriellen Umfeld die höchste Priorität hat und der Benutzer den Normalbetrieb (beispielsweise durch das mechanische Abtrennen einer verdächtigen Komponente vom Netzwerk) nicht unterbrechen möchte/ darf, bleiben Konfigurationsänderungen (und insbesondere einzelne Konfigurationsänderungen) zur Laufzeit meist unberücksichtigt. Mit anderen Worten: sie werden ignoriert. Dadurch wird - wie bereits erwähnt - ermöglicht, dass eine ggf. manipulierte Anlagenkomponente mit den anderen Anlagenkomponenten weiterhin kommunizieren darf, obwohl dies mit Security-Risiken verbunden ist. Erst falls derartige (ggf. böswillige) Änderungen vermehrt gemeldet und durch die Korrelation mit einem identifizierten Schaden (nachweisbar) in Verbindung gebracht werden, wird nach dem Stand der Technik im Nachhinein eine forensische Auswertung durchgeführt, die jedoch die Ursache der bereits aufgetretenen Probleme ggf. zwar erklärt, jedoch diese Probleme nicht (mehr) unterbinden bzw. rückgängig machen kann.

In der EP 3 258 662 A1 ist ein Verfahren zur Registrierung eines intelligenten elektrischen Gerätes bei einer Zertifizierungsstelle offenbart.

Die US 5 745 574 A offenbart eine Sicherheitsinfrastruktur mit einer Vielzahl an Zertifizierungsstellen.

Der Erfindung liegt die Aufgabe zugrunde, ein Verfahren zum Überwachen einer Komponente einer technischen Anlage, eine dazugehörige Komponente sowie ein Leitsystem für die technische Anlage anzugeben, welche eine erhöhte Anlagensicherheit und -verfügbarkeit ermöglichen.

Diese Aufgabe wird gelöst durch ein Verfahren mit den Merkmalen des Anspruchs 1. Außerdem wird die Aufgabe gelöst durch Komponente für eine technische Anlage gemäß Anspruch 11. Zudem wird die Aufgabe gelöst durch ein Leitsystem für eine technische Anlage gemäß Anspruch 14. Vorteilhafte Weiterbildungen ergeben sich aus den abhängigen Ansprüchen.

Ein erfindungsgemäßes Verfahren umfasst die folgenden Verfahrensschritte:
a) Überwachen einer Komponente, welche Teil einer technischen Anlage ist und beim Betrieb der technischen Anlage verwendet wird, wobei der Komponente eine Konfiguration für die Verwendung in der technischen Anlage zugeordnet ist;
b) Beim Auftreten einer Änderung der Konfiguration der Komponente, insbesondere einer zuvor definierten Änderung, automatisches Initiieren und Durchführen einer Revokation von Zertifikaten, die der Komponente für deren Verwendung beim Betrieb der technischen Anlage ausgestellt worden sind.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Bei der Komponente der technischen Anlage kann es sich um ein beliebiges Gerät oder eine computerimplementierte Applikation handeln, die für eine Kommunikation mit weiteren Komponenten der technischen Anlage der Authentifizierung durch eines oder mehrere Zertifikate bedarf. Komponenten der verfahrenstechnischen Anlage können beispielsweise Vorrichtungen wie Pumpen, Ventile, Motoren, Heizkessel und dergleichen, aber auch Softwareprogramme sein. Unter einem Zertifikat wird dabei ein digitaler Datensatz verstanden, der bestimmte Eigenschaften (von Maschinen, Geräten, Applikationen und dergleichen) bestätigt. Eine Authentizität und Integrität des Zertifikats können in der Regel mittels kryptografischer Verfahren verifiziert werden.

Die Komponente kann über eine Automatisierung verfügen, d.h. sie kann in der Lage sein, selbständig (automatisiert) physikalische Größen mithilfe technischer Mittel zu erfassen und zu beeinflussen. Mit anderen Worten kann die Komponente der technischen Anlage in die Lage versetzt sein, selbsttätig zu arbeiten.

Bei der Konfiguration handelt es sich um Daten bzw. Parameter, die einen Betrieb der Komponente in der konkreten technischen Anlage betreffen. Die Konfiguration kann beispielsweise sicherheitsrelevante Aspekte wie beispielsweise Passwörter oder CPU-Schutzstufen umfassen, welche die Komponente betreffen. Dabei können Passwörter im Rahmen einer Konfigurationsänderung deaktiviert/aktiviert oder geändert werden. Ferner können unter der Konfiguration auch weitere anwendungs- oder systemspezifische Parameter wie z.B. die Systemzeit und der Betriebszustand der Komponente erfasst werden.

Die Revokation des oder der Zertifikate kann in an sich bekannter Weise von einer Zertifizierungsstelle der technischen Anlage vorgenommen werden. Die Zertifizierungsstelle wird auch als eine sogenannte "Issuing CA (Certification Authority)" bezeichnet. Eine derartige Issuing CA ist in der Regel stets online und stellt, basierend auf eingehenden Zertifikatsanträgen, Zertifikate für diverse Antragsteller aus, die sie mit ihrem eigenen Issuing CA Zertifikat signiert. Die Vertrauenswürdigkeit der Issuing CA wird dadurch sichergestellt, dass ihr eigenes Issuing CA Zertifikat durch das Zertifikat einer vertrauenswürdigen Wurzelzertifizierungsstelle (auch als "Root CA" bezeichnet), die sich in einer abgesicherten Umgebung befindet, signiert ist. Hierbei ist zu beachten, dass die Root CA die meiste Zeit offline ist und nur dann - unter der Einhaltung strengster Sicherheitsvorkehrungen - aktiviert bzw. eingeschaltet wird, wenn sie ein Zertifikat für eine zugehörige Issuing CA ausstellen soll. Die Root CA kann sich außerhalb der technischen Anlage befinden.

Dadurch, dass das oder die für einen Betrieb der Komponente, insbesondere für die Kommunikation der Komponente mit weiteren Komponenten, erforderlichen Zertifikate automatisch revoziert werden, kann erfolgreich verhindert werden, dass eine "verdächtige" (und. ggf. manipulierte bzw. von einem Angreifer übernommene) Komponente weiterhin beim Betrieb der technischen Anlage verwendet wird und dabei beispielsweise mit ihren Kommunikationspartnern kommuniziert und diese, wie auch potenziell die gesamte technische Anlage, negativ beeinflusst.

Die Änderung bezieht sich dabei in der allgemeinsten Form auf jede Änderung, die an der Konfiguration der Komponente vorgenommen wird. Dabei ist nur der Soll-Zustand (beispielsweise implizit, durch die initiale als optimal sicher geltende Konfiguration) vorgegeben und jegliche Abweichung von diesem Zustand, die erkannt wird (auch wenn sie vorher nicht definiert wurde), führt dazu, dass eine Interaktion mit der betroffenen Komponente durch die Revokation deren Zertifikate unterbunden wird. Bevorzugt stellt die Änderung eine Änderung dar, die zuvor, beispielsweise von einem Projekteur der technischen Anlage, definiert wurde.

Die Änderung der Konfiguration der Komponente kann eine außerplanmäßige Änderung darstellen. In Abgrenzung zu planmäßigen Änderungen, die beispielsweise aufgrund eines Wartungsplans oder eines Umbaus der technischen Anlage zu erwarten waren, führen hierbei nur außerplanmäßige Änderungen der Konfiguration zu dem automatischen Revozieren des Zertifikats oder der Zertifikate.

Die Änderung der Konfiguration kann auch durch eine Klassifizierung der Änderung bestimmt sein. Dabei können insbesondere Klassifizierungen wie "kritisch" oder "verdächtig" verwendet werden. Diese Klassifizierung kann die Komponente selbst vornehmen. Auch eine Klassifizierung der Änderung durch eine separate Auswerteeinheit ist möglich.

Im Rahmen der automatischen Initiierung der Revokation der Zertifikate der Komponente kann eine Meldung an einen Operator der technischen Anlage erzeugt werden, wobei nach der Erzeugung der Meldung eine bestimmte Zeitspanne mit der tatsächlichen Initiierung der Revokation gewartet wird. Dadurch erhält der Operator die Möglichkeit, die Gefahrenlage der Komponente zu prüfen, bevor die Revokation dann automatisch nach Ablauf der Zeitspanne vorgenommen wird. Im Rahmen der Meldung kann dem Operator dabei eine Auswahl über mögliche weitere Handlungsschritte dargeboten werden.

Bevorzugt wird im zuvor erläuterten Schritt a das Überwachen der Komponente anhand eines oder mehrerer, von der Komponente lokal erfasster Ereignisse vorgenommen. Dabei wird im zuvor erläuterten Schritt b das Auftreten der definierten Änderung der Konfiguration der Komponente anhand des oder der lokal erfassten Ereignisse detektiert. Diese Ereignisse können sogenannte "Security Events" darstellen, die von einem auf der Komponente implementierten Überwachungsdienst erkannt werden.

Dieser Überwachungsdienst kann direkt das Revozieren des Zertifikats oder der Zertifikate initiieren. Es ist aber auch möglich, dass die erfassten Ereignisse in einer separaten Auswerteeinheit der technischen Anlage oder in einer cloudbasierten Umgebung abgelegt werden. Bei der Auswerteeinheit kann es sich beispielsweise um ein sogenanntes Syslog-/SIEM-System handeln. Diese Auswerteeinheit kann dann die Revokation initiieren. Auch eine Weiterleitung der erfassten Ereignisse bzw. der Securit-Events an eine separate Erfassungsinstanz (außerhalb eines Syslog-/SIEM-Systems) ist möglich.

Ganz besonders bevorzugt werden nach der Revokation der Zertifikate automatisch definierbare Aktionen angestoßen, um den Wegfall der Komponente zu kompensieren. Eine solche definierbare Aktion kann eine Anpassung von Kommunikationsbeziehungen zwischen weiteren Komponenten der technischen Anlage darstellen. Eine definierbare Aktion kann auch eine Zuweisung von Aufgaben, die vor der Revokation von der Komponente wahrgenommen worden sind, an weitere Komponenten der technischen Anlage sein. Durch die definierbaren Aktionen können eine Gefährdung des Normalbetriebs und der Verfügbarkeit der gesamten Anlage effektiv und automatisiert verhindert werden.

Bei der Definition der automatisch anzustoßenden Aktionen kann dabei auf ein selbstlernendes System zurückgegriffen werden, welches insbesondere durch zuvor definierte Aktionen angelernt worden ist. Dadurch lässt sich die Gefährdung des Normalbetriebs und der Verfügbarkeit der gesamten technischen Anlage weiter minimiert werden.

Unter einem Leitsystem wird im vorliegenden Kontext ein computergestütztes, technisches System verstanden, das Funktionalitäten zum Darstellen, Bedienen und Leiten der verfahrenstechnischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber kann das Leitsystem u.a. Mittel zur Visualisierung der verfahrenstechnischen Anlage und zu einem Engineering aufweisen. Unter dem Begriff Leitsystem sind zusätzlich auch weitere Recheneinheiten für komplexere Regelungen und Systeme zur Datenspeicherung und - verarbeitung zu fassen.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Operator Station Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen.

Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Das erfindungsgemäße Leitsystem stellt in besonders vorteilhafter Art und Weise die Funktion bereit, eine Teilmenge der Komponenten der verfahrenstechnischen Anlage direkt beim Bedienen und Beobachten in einer in sich abgeschlossenen Konfiguration(-sdatei) bereitzustellen. Diese Konfiguration beinhaltet die Funktionsrechte, die den darin enthaltenen Komponenten von dem Leitsystem zugewiesen worden sind. Ein weiteres, von dem Leitsystem verschiedenes (zweites) Leitsystem kann die Konfiguration im Rahmen einer Projektierung bzw. eines Engineerings der Teilmenge von Komponenten integrieren. Es sind verschiedene Szenarien möglich: Zum einen kann das weitere Leitsystem zum Betrieb der Teilmenge der Komponenten innerhalb der(selben) verfahrenstechnischen Anlage verwendet werden, wobei die Teilmenge der Komponenten mit weiteren Komponenten der verfahrenstechnischen Anlage interagieren kann. Zum anderen kann die Teilmenge der Komponenten auch autark betrieben werden (innerhalb oder außerhalb der verfahrenstechnischen Anlage).

Das Leitsystem ermöglicht eine Fremdorchestrierung der Teilmenge der Komponenten, was ein Zusammenspiel der verfahrenstechnischen Anlage mitanderen Anlage vereinfacht. Es kann beispielsweise eine Teilmenge von Komponenten der verfahrenstechnischen Anlage, die zur Herstellung eines Wirkstoffes ausgebildet ist, mit einer weiteren Anlage kombiniert werden, die der Abfüllung von Erzeugnissen dient. Das Leitsystem erhöht in wesentlichem Maße die Flexibilität der verfahrenstechnischen Anlage, da eine Modularisierung (wobei die Teilmenge einem Modul entspricht) zu einer Laufzeit der verfahrenstechnischen Anlage durch den Operator Station Server erfolgen kann. Durch die der Konfiguration beigefügten Funktionsrechte für die einzelnen Komponenten der Teilmenge (des Moduls) kann zudem ein fundierter Beitrag zur Einhaltung des Minimalitätsprinzips bzw. der Least-Privilege Anforderung der IEC-Norm 62443 hinsichtlich minimaler Funktionsrechte geleistet werden.

Bevorzugt ist die Anforderung des Operators an einen Operator Station Client des Leitsystems gerichtet bzw. zu richten, wobei der Operator Station Client dazu ausgebildet ist, auf die Anforderung des Operators hin die Konfiguration von dem Operator Station Server abzufragen und an einer externen Schnittstelle zur Integration in das weitere Leitsystem bereitzustellen. Die externe Schnittstelle kann dabei sowohl in dem Operator Station Client als auch in dem Operator Station Server realisiert sein und beispielsweise auf dem Profinet oder dem OPC UA Standard beruhen.

Die Anforderung des Operators kann eine Auswahl der Teilmenge der Vielzahl von Komponenten aus einer durch den Operator Station Client des Leitsystems visuell dargebotenen technologischen Hierarchie der Komponenten der verfahrenstechnischen Anlage umfassen. Die technologische Hierarchie stellt dabei ein hierarchisches Namensschema dar, welches eine Funktionsstruktur der einzelnen Komponenten der verfahrenstechnischen Anlage abbildet und durch den Operator Station Client dem Operator visuell dargeboten wird. Mit Hilfe der technologischen Hierarchie kann die (komplexe) verfahrenstechnische Anlage in Teilprobleme zerlegt werden, die mit vertretbarem Aufwand lösbar sind. Aus der technologischen Hierarchie kann der Operator effizient eine Teilmenge von Komponenten der verfahrenstechnischen Anlage identifizieren, die als Konfiguration (mit anderen Worten: als Modul oder als Package Unit) einem oder mehreren weiteren Leitsystemen zur Verfügung gestellt wird.

Die erzeugte Konfiguration kann eine Datenstruktur aufweisen, die an dem Aufbau eines Modular Type Packages gemäß dem VDI/VDE/NAMUR 2658 Standard orientiert ist. Das erfindungsgemäße Leitsystem fügt dabei der durch den VDI/VDE/NAMUR 2658 Standard vorgegebenen Struktur weitere Informationen wie die Funktionsrechte hinzu.

Die Konfiguration kann Informationen über Kommunikationsprotokolle umfassen, die von der, von der Konfiguration umfassten Teilmenge der Vielzahl von Komponenten verwendet werden.

Die Konfiguration kann eine strukturelle Beschreibung der von der Konfiguration umfassten Teilmenge der Vielzahl von Komponenten umfassen. Die Konfiguration kann beispielsweise eine Information darüber umfassen, dass die Teilmenge ein Ventil und einen dazugehörigen Durchflussmesser umfasst.

Im Rahmen einer vorteilhaften Weiterbildung der Erfindung umfasst die Konfiguration Zertifikate, die für eine Kommunikation der von der Konfiguration umfassten Teilmenge der Vielzahl von Komponenten mit dem weiteren Leitsystem vorgesehen und ausgebildet sind. Unter einem Zertifikat wird dabei ein digitaler Datensatz verstanden, der bestimmte Eigenschaften (in diesem Fall von Maschinen, Geräten, Applikationen und dergleichen) bestätigt. Eine Authentizität und Integrität des Zertifikats können in der Regel mittels kryptografischer Verfahren verifiziert werden.

Für eine gesicherte Orchestrierung ausschließlich der dedizierten, ad hoc modularisierten Teilmenge der Vielzahl von Komponenten der verfahrenstechnischen Anlage mit dem vorgesehen, dedizierten weiteren Leitsystem als weiterer Orchestrierungs-Instanz werden dabei operative Zertifikate ausgestellt und in der Konfiguration hinterlegt, die von der Teilmenge der Komponenten ausschließlich für die Kommunikation mit der vorgesehen, dedizierten weiteren Orchestrierungs-Instanz (dem weiteren Leitsystem) verwendet werden dürfen. Die Zertifikate können dabei in einem sicheren, hardwarebasierten Sicherheitsspeicher der Teilmenge der Vielzahl von Komponenten hinterlegt sein.

Die zuvor formulierte Aufgabe wird außerdem gelöst durch eine Komponente für eine technische Anlage, insbesondere ein Gerät oder eine Applikation, die einen computerimplementierten Überwachungsdienst aufweist, der dazu ausgebildet ist, die Komponente, welche Teil einer technischen Anlage sein kann und beim Betrieb der technischen Anlage verwendbar ist, wobei der Komponente eine Konfiguration für die Verwendung in der technischen Anlage zugeordnet ist, hinsichtlich eines Auftretens einer Änderung der Konfiguration der Komponente, insbesondere hinsichtlich des Auftretens einer definierten Änderung, zu überwachen und im Fall des Auftretens der Änderung automatisch eine Revokation von Zertifikaten, die der Komponente für deren Verwendung beim Betrieb der technischen Anlage ausgestellt worden sind, zu initiieren.

Die Aufgabe wird zudem gelöst durch ein Leitsystem für eine technische Anlage, insbesondere eine Prozess- oder Fertigungsanlage, welches wenigstens eine Zertifizierungsstelle umfasst, die dazu ausgebildet ist, eine von einer, wie zuvor erläutert ausgebildeten, Komponente initiierte Revokation von Zertifikaten vorzunehmen.

Die Aufgabe wird außerdem gelöst durch ein Leitsystem für eine technische Anlage, insbesondere eine Prozess- oder Fertigungsanlage, welches dazu ausgebildet ist, ein Verfahren wie zuvor erläutert durchzuführen. Die Überwachung der Komponente kann dabei durch die Komponente selbst oder von einer zusätzlichen Komponente vorgenommen wurde, was zuvor bereits erläutert wurde.

Die Aufgabe wird zudem gelöst durch einen computerimplementierter Überwachungsdienst, der dazu ausgebildet ist, eine Komponente, welche Teil einer technischen Anlage sein kann und beim Betrieb der technischen Anlage verwendbar ist, wobei der Komponente eine Konfiguration für die Verwendung in der technischen Anlage zugeordnet ist, hinsichtlich eines Auftretens einer Änderung der Konfiguration der Komponente, insbesondere einer definierten Änderung, zu überwachen und im Fall des Auftretens der Änderung automatisch eine Revokation von Zertifikaten, die der Komponente für deren Verwendung beim Betrieb der technischen Anlage ausgestellt worden sind, zu initiieren.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Figur ist eine als ein Gerät ausgebildete Komponente 1 einer technischen Anlage dargestellt. Die technische Anlage umfasst eine Registrierungsstelle 2 (engl. Registration Authority, kurz: RA), eine Zertifizierungsstelle 3 (engl. Certification Authority, kurz: CA) und eine als SIEM-System ausgebildete Sicherheitsstelle 4.

In der Figur ist dargestellt, wie die Komponente 1 für den Betrieb in der technischen Anlage vorbereitet und konfiguriert wird. Weiterhin ist dargestellt, wie die Komponente 1 hinsichtlich Änderungen an ihrer Konfiguration überwacht und ggf. entsprechende Schritte eingeleitet werden. Der Ablauf eines solchen Verfahrens und die spezifische Ausprägung des Leitsystems mit der Komponente 1 werden im Folgenden erläutert.

Zunächst wird erläutert, welche Schritte gemäß aktuell üblichen Security-Konzepten - basierend auf den in der Norm IEEE802.1AR eingeführten sicheren Identitäten - durchgeführt werden, um die Komponente 1 für einen Betrieb in die technische Anlage zu integrieren. Ein erster Schritt I findet in der Regel bei dem Hersteller der Komponente 1 statt. Eine ausstellende Zertifizierungsstelle 5 stellt der Komponente 1 in Verbindung mit einer Wurzelzertifizierungsstelle 6 ein Gerätezertifikat aus, welches samt dem zugehörigen privaten Schlüssel und der zugehörigen, aus den Zertifikaten der übergeordneten Zertifizierungsstelle 5 einschließlich des Zertifikats der Wurzelzertifizierungsstelle 6 bestehenden Zertifikatskette in der Komponente 1 hinterlegt wird. Dabei soll der private Schlüssel (engl. Private Key) möglichst sicher (vorzugsweise in der Hardware der Komponente 1) hinterlegt werden, so dass keine weitere Instanz außer der Komponente 1 selbst in Besitz des privaten Schlüssels kommen kann. Es ist zu beachten, dass dieser Schritt alternativ oder zusätzlich - möglicherweise nach einer erfolgten erfolgreichen Prüfung der Authentizität der Komponente 1 - auch bei einem OEM/Integrator/Maschinenbauer durchgeführt werden kann, der die Komponente 1 - wie oben erläutert - mit einem aus einem Gerätezertifikat, einem zugehörigen privaten Schlüssel und einer zugehörigen Zertifikatskette ausstattet.

In einem zweiten Schritt II wird die Komponente 1 in der technischen Anlage eingebaut und deren Authentizität wird geprüft. Dieser Schritt II wird von einem Engineering- bzw. Provisionierungs- bzw. Registrierungs- bzw. Bereitstellungswerkzeug 7 eines Leitsystems der technischen Anlage vorgenommen. Nach erfolgreicher Prüfung der Authentizität der Komponente 1 wird durch das Engineering- bzw. Bereitstellungswerkzeug 7 eine Vertrauenskette in der Komponente 1 hinterlegt, die sich auf die Zertifizierungsstelle 3 der technischen Anlage mit einer ausstellenden Zertifizierungsstelle 8 und einer Wurzelzertifizierungsstelle 9 bezieht. Dabei können die Schritte II und III gemäß den aktuellen, skalierbaren Konzepten beispielsweise im Wareneingang der technischen Anlage durchgeführt werden.

Daraufhin wird die Komponente 1 (genauer: eine digitale Repräsentation der Komponente 1) in ein computerimplementiertes (Komponenten-)Inventar 10 der technischen Anlage integriert (Schritt IV).

Nach der Inbetriebnahme der Komponente 1 in der eigentlichen operativen Einsatzumgebung wird mithilfe des Engineering- bzw. Bereitstellungswerkzeugs 7 durch einen Projekteur eine sichere Konfiguration der Komponente 1 (zeitverzögert) nach der Inbetriebnahme der Komponente 1, unter Berücksichtigung der Konfiguration dieser Umgebung und der für die Anlagenkomponente vorgesehenen Aufgaben, erzeugt und in der Komponente 1 hinterlegt (Schritt V). In einem anschließende Schritt VI beantragt die Komponente 1 ein kundenspezifisches, operatives Zertifikat, ein sogenanntes LDevID-Zertifikat nach IEEE202.1AR, bei der Registrierungsstelle 2, welche den Zertifikatsantrag an die Zertifizierungsstelle 3 weiterleitet. Das von der Zertifizierungsstelle 3 erzeugte operative Zertifikat wird dann auf die Komponente 1 übertragen. Falls die Komponente 1 nicht in der Lage ist, einen Zertifikatsantrag zu stellen, muss dieser Schritt von einer dazu befähigte Komponente der technischen Anlage, beispielsweise von einem Engineering- bzw. Provisionierungs- bzw. Registrierungs- bzw. Bereitstellungswerkzeug, stellvertretend erfolgen. Mit diesem operativen Zertifikat kann sich die Komponente 1 gegenüber weiteren Komponente der technischen Anlage authentifizieren, um beispielsweis eine Kommunikation mit diesen zu ermöglichen (Schritt VII). Die Komponente 1 der technischen Anlage kommuniziert in der Regel mit mehr als einem Kommunikationspartner, wobei sie mehr als ein sicheres Kommunikationsprotokoll nutzt. Beispielsweise kann ein industrielles Automatisierungssystem (AS) in der Regel sein webbasiertes User Interface per HTTPS für den Benutzerzugriff bereitstellen (wobei ein zugehöriges TLS Server Zertifikat zum Einsatz kommt) und gleichzeitig (in Rolle des OPC UA Server) per OPC UA mit den zugehörigen OPC UA-Clients kommunizieren. Deswegen sollten Komponenten einer technischen Anlage in der Regel mehrere Zertifikate (LDevID Cert.) beantragen, wobei es aus Security-Sicht empfehlenswert ist, ein dedizierts Zertifikat pro Verwendungszweck zu beantragen bzw. zu nutzen.

Die technische Anlage bzw. das Leitsystem der technischen Anlage weist einen computerimplementierten Überwachungsdienst 11 (engl. Security Configuration Watchdog) auf. Dieser kann lokal auf der Komponente 1 ausgeführt werden, wobei er einen "Security Event Store" bzw. einen Puffer der Komponente 1 dahingehend überwacht, ob Änderungen an der sicheren Konfiguration der Komponente 1 auftreten. Falls der Event Store / Puffer der Komponente 1 durch den computerimplementierten Überwachungsdienst 11 überwacht wird, entfällt prinzipiell die Notwendigkeit, eine Sicherheitsstelle 4 bzw. ein Syslog-/SIEM-System zu nutzen, denn die Reaktion auf eine Konfigurationsänderung wird basierend auf einem lokal erfassten Security Event ausgelöst.

Der computerimplementierte Überwachungsdienst 11 kann auch auf der als SIEM-System ausgebildeten Sicherheitsstelle 4 implementiert sein. Bei einer vorgenommenen Änderung (Schritt VIII) der Konfiguration wird eine entsprechende Meldung erzeugt (Schritt IX), die in der Sicherheitsstelle 4 hinterlegt wird. Der computerimplementierte Überwachungsdienst 11 kann aber auch auf einer weiteren (hier dargestellten) Instanz implementiert sein, die von der Komponente 1 oder von der Sicherheitsstelle 4 die Meldungen der Komponente 1 übermittelt bekommt, welche die Änderung der Konfiguration der Komponente 1 betreffen.

Für die Konfiguration des computerimplementierten Überwachungsdienstes 11 und der im Falle der erkannten Konfigurationsänderung auszulösenden Aktionen wird ein intelligenter (und ggf. ML-/AI-basierter) Konfigurationsdienst 12 "SC Watchdog Configuration Service" (SCWC Service) verwendet (Schritt X). Falls die durch die Anlagenkomponente 1 unterstützten Meldungen bzw. Security Events im Voraus bekannt sind (weil sie z.B. in einem entsprechenden Handbuch und/oder auf einer entsprechenden Webseite aufgelistet sind, kann die Konfiguration der Aktionen, die als Reaktion auf eine bestimmte Konfigurationsänderung bzw. ein bestimmtes Security Event (ggf. in einer bestimmten Reihenfolge) angestoßen werden können, im Voraus erfolgen. Die Konfiguration kann dabei einem definierten Schema folgen und beispielsweise in einer XML-/JSON-Datei in der technischen Anlage bzw. in dem Leitsystem hinterlegt sein. Dabei ist zu berücksichtigen, dass für manche Security Events (wie z.B. "SE_LOGOFF"), die auf keine Security-relevanten Konfigurationsänderungen hindeuten, keine Aktionen zu konfigurieren notwendig sein können. Falls nicht alle relevanten Security Events im Voraus bekannt sind oder falls die Reaktion auf ein oder mehrere relevante Security Events aus einem bestimmten Grund nicht im Voraus definiert werden, kann im Rahmen der Konfiguration anstelle der o.g. Aktionen eine sog. "ML-/AI-based Action" ausgewählt bzw. adäquat definiert werden. Beispielsweise kann dabei der Ansatz ausgewählt werden, der darin besteht, dass adäquate ML-Methoden basierend auf den von einem Benutzer als Reaktion auf ein bestimmtes Security Event ausgelösten Aktionen angewendet werden sollen.

Um den Benutzer oder eine (ggf. ML/KI-basierte SW-Instanz) im Falle eines durch den o.g. computerimplementierten Überwachungsdienst 11 erkannten Security Events über eine erfolgte Security-relevante Konfigurationsänderung der Komponente 1 zu informieren und zu warnen, dass die Kommunikation mit dieser "verdächtigen" Komponente 1 aufgrund dieser Änderung unterbunden wird, wird ein Sicherheitsalarmdienst 13 (engl. "Security Alert Service", kurz: SA Service) eingeführt. Dieser erzeugt eine Meldung an einen Operator der technischen Anlage (Schritt XI), wobei nach der Erzeugung der Meldung eine bestimmte Zeitspanne mit der tatsächlichen Initiierung der Revokation der operativen Zertifikate der Komponente 1 gewartet wird.

Um eine vorbeugende adäquate "kompensierende" Aktion (Schritt XII) anzustoßen, damit die Verfügbarkeit durch die anstehende Revokation des oder der Zertifikate nicht beeinträchtigt wird, wird ein konfigurierbarer Kompensierungsdienst 14 (engl. "Compensating Action Trigger Service", kurz: CAT Service) eingeführt. Eine solche Aktion kann z.B. darin bestehen, dass die Aufgaben der betroffenen, verdächtigen Komponente 1 an eine andere, redundante Komponente übertragen werden.

Um die Revokation des für die sichere Kommunikation notwendigen operativen Zertifikats (bzw. mehrerer Zertifikate, falls die möglicherweise verdächtige Komponente 1 mehrere Zertifikate für die Kommunikation mit ihren verschiedenen Kommunikationspartnern nutzt) im Bedarfsfall automatisiert anstoßen zu können, wird ein Revokationsdienst 15 (engl. Revocation Service") verwendet (Schritt XIII).

Ein möglicher Angriff bzw. eine mögliche Manipulation 16 auf einen Kommunikationspartner 17 der Komponente 1 wird durch die zuvor erläuterten Schritte unterbunden. Der verdächtigen Komponente 1 wird dabei infolge der Umsetzung der oben beschriebenen Merkmale und der Durchführung der oben beschriebenen Schritte das oder die für die Kommunikation erforderlichen operativen Zertifikate entzogen.

Durch die beschriebene Erfindung kann ein fundierter Beitrag zur Schutzverbesserung technischer (insbesondere industrieller) Anlagen in deren gesamten Lebenszyklus, zur störungsfreien Aufrechterhaltung des Normalbetriebs und somit zur optimalen Verfügbarkeit (die das oberste Ziel im Kontext der Industrial / Cyber Security darstellt) geleistet werden. Weiterhin führt die Erfindung zu einer Optimierung und Flexibilisierung des "Industrial Security Monitoring" durch die optimale Berücksichtigung der Security Events, die auf security-relevanten Änderungen der Konfiguration einer Komponente 1 hindeuten, sowie zu einem zeitnahen und adäquaten Reagieren auf diese Änderungen durch den Entzug/ die Revokation der für die sichere Kommunikation erforderlichen Zertifikate. Insgesamt kann damit ein wesentlicher Beitrag zur Erfüllung der PKI-bezogenen Anforderungen der IEC 62443 Norm geleistet werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren, umfassend:
a) Überwachen einer Komponente (1), welche Teil einer technischen Anlage ist, und beim Betrieb der technischen Anlage verwendet wird, wobei der Komponente (1) eine Konfiguration für die Verwendung in der technischen Anlage zugeordnet ist,
b) Beim Auftreten einer Änderung der Konfiguration der Komponente (1), insbesondere einer zuvor definierten Änderung, automatisches Initiieren und Durchführen einer Revokation von Zertifikaten, die der Komponente (1) für deren Verwendung beim Betrieb der technischen Anlage ausgestellt worden sind.

2. Verfahren nach Anspruch 1, bei dem im Rahmen der automatischen Initiierung der Revokation der Zertifikate der Komponente (1) eine Meldung an einen Operator der technischen Anlage erzeugt wird, wobei nach der Erzeugung der Meldung eine bestimmte Zeitspanne mit der tatsächlichen Initiierung der Revokation gewartet wird.

3. Verfahren nach Anspruch 2, bei dem dem Operator im Rahmen der Meldung eine Auswahl über mögliche weitere Handlungsschritte dargeboten wird.

4. Verfahren nach einem der vorangegangenen Ansprüche, bei dem im Schritt a gemäß Anspruch 1 das Überwachen der Komponente (1) anhand eines oder mehrerer, von der Komponente (1) lokal erfassten Ereignisse vorgenommen wird, und bei dem im Schritt b gemäß Anspruch 1 das Auftreten der definierten Änderung der Konfiguration der Komponente (1) anhand des oder der lokal erfassten Ereignisse detektiert wird.

5. Verfahren nach einem der vorangegangenen Ansprüche, bei dem eine Änderung der Konfiguration der Komponente (1) ausschließlich eine außerplanmäßige Änderung darstellt.

6. Verfahren nach einem der vorangegangenen Ansprüche, bei dem eine Änderung der Konfiguration durch eine Klassifizierung der Änderung bestimmt ist, insbesondere durch eine Klassifizierung als "kritisch" oder als "verdächtig".

7. Verfahren nach einem der vorangegangenen Ansprüche, bei dem nach der Revokation der Zertifikate automatisch definierbare Aktionen angestoßen werden, um den Wegfall der Komponente (1) zu kompensieren.

8. Verfahren nach Anspruch 7, bei dem eine definierbare Aktion eine Anpassung von Kommunikationsbeziehungen zwischen weiteren Komponenten der technischen Anlage darstellt.

9. Verfahren nach Anspruch 7 oder 8, bei dem eine definierbare Aktion eine Zuweisung von Aufgaben, die vor der Revokation von der Komponente (1) wahrgenommen worden sind, an weitere Komponenten der technischen Anlage darstellt.

10. Verfahren nach einem der Ansprüche 7 bis 9, bei dem bei der Definition der automatisch anzustoßenden Aktionen auf ein selbstlernendes System (12) zurückgegriffen wird, welches insbesondere durch zuvor definierte Aktionen angelernt worden ist.

11. Komponente (1) für eine technische Anlage, insbesondere ein Gerät oder eine Applikation, die einen computerimplementierten Überwachungsdienst (11) aufweist, der dazu ausgebildet ist, die Komponente (1), welche Teil einer technischen Anlage sein kann und beim Betrieb der technischen Anlage verwendbar ist, wobei der Komponente (1) eine Konfiguration für die Verwendung in der technischen Anlage zugeordnet ist, hinsichtlich eines Auftretens einer Änderung der Konfiguration der Komponente (1), insbesondere hinsichtlich des Auftretens einer definierten Änderung, zu überwachen und im Fall des Auftretens der Änderung automatisch eine Revokation von Zertifikaten, die der Komponente (1) für deren Verwendung beim Betrieb der technischen Anlage ausgestellt worden sind, zu initiieren.

12. Komponente (1) nach Anspruch 11, bei der eine Änderung der Konfiguration der Komponente (1) eine außerplanmäßige Änderung darstellt.

13. Komponente (1) nach Anspruch 11 oder 12, bei der eine Änderung der Konfiguration durch eine Klassifizierung der Änderung bestimmt ist, insbesondere durch eine Klassifizierung als "kritisch" oder als "verdächtig".

14. Leitsystem für eine technische Anlage, insbesondere eine Prozess- oder Fertigungsanlage, welches wenigstens eine Zertifizierungsstelle (3) umfasst, die dazu ausgebildet ist, eine von einer gemäß einem der Ansprüche 11 bis 13 ausgebildete Komponente (1) initiierte Revokation von Zertifikaten vorzunehmen.

15. Leitsystem für eine technische Anlage, insbesondere eine Prozess- oder Fertigungsanlage, das dazu ausgebildet ist, ein Verfahren gemäß einem der Ansprüche 1 bis 10 durchzuführen.

16. Computerimplementierter Überwachungsdienst (11), der dazu ausgebildet ist, eine Komponente (1), welche Teil einer technischen Anlage sein kann und beim Betrieb der technischen Anlage verwendbar ist, wobei der Komponente (1) eine Konfiguration für die Verwendung in der technischen Anlage zugeordnet ist, hinsichtlich eines Auftretens einer Änderung der Konfiguration der Komponente (1), insbesondere einer definierten Änderung, zu überwachen und im Fall des Auftretens der Änderung automatisch eine Revokation von Zertifikaten, die der Komponente (1) für deren Verwendung beim Betrieb der technischen Anlage ausgestellt worden sind, zu initiieren.
